# EUROPEAN PATENT SPECIFICATION

(11) **EP 1 037 521 B1**
(45) Date of publication and mention of the grant of the patent: **11.05.2005**
(21) Application number: 98948511.5
(22) Date of filing: 24.09.1998
(51) Int. Cl.: A01G 9/02, A01G 9/10

(54) **LEGGED POT**
TOPF MIT BEIN
POT POURVU DE PIEDS

(30) Priority: 12.12.1997 US 990195; 18.08.1998 US 135916
(43) Date of publication of application: 27.09.2000
(73) Proprietor: Fan, Jianhua, Nashville, TN 37209 (US)
(72) Inventor: Fan, Jianhua, Nashville, TN 37209 (US)
(74) Representative: Bardehle, Heinz, Dipl.-Ing.
(86) International application number: PCT/US1998/019986
(87) International publication number: WO 1999/030553

(56) References cited:
- WO-A-96/35326
- FR-A- 2 310 695
- FR-A- 2 724 813
- GB-A- 1 316 159
- NL-A- 8 800 273
- US-A- 4 059 920
- US-A- 5 564 226

## Description

### I. Field of the Present Invention

The present invention relates to a pot with a leg, more particularly to a pot with at least one leg, according to the generic part of claim 1 and furthermore particularly to a pot with one or two legs, and to a multiple cell tray according to claim 6.

### II. Description of the Prior Art

Traditional pots for plants, flowers, or vegetable, etc., have no legs. The main problem of the traditional pots is that they are not designed to solve root damage problems. Some existing plant pots have a few holes on the bottom of the pots for draining excess water to avoid root damages. But as a result, the plants have to be watered frequently and carefully without having too less water or too much water. Sometimes, a tray is used to hold water. However, again, the plant can be easily damaged because first of all, the roots usually tend to grow down toward the bottom of the water level such that the roots are easily damaged by water; and secondly, the space for holding water in the tray is also limited such that it does not reduce the effort of having to frequently water the plants; and lastly, but not the least, air circulation around the roots is poor due to the limited space around the root.

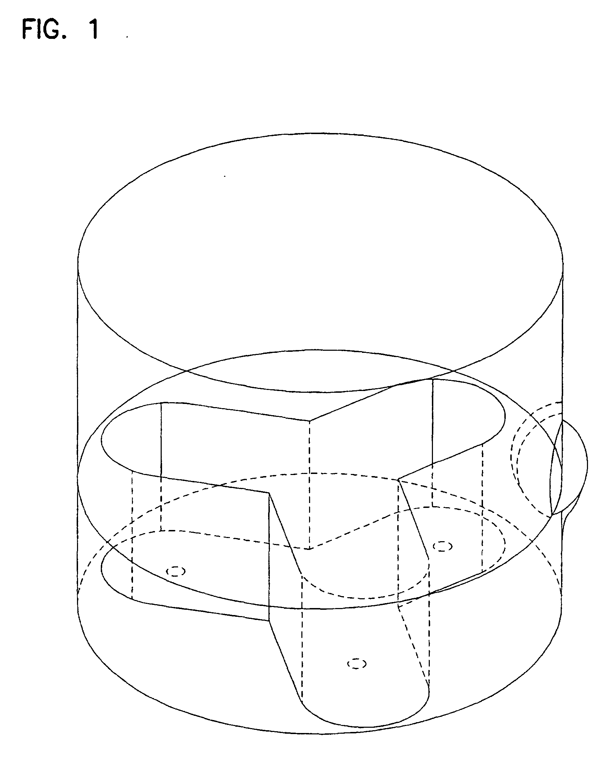

Figure 1 shows a pot which intends to solve the above problems. An Y-shape member of the plate tries to hold the water outside the Y-shape member. Water flows inside the Y-shape member through the bottom of the Y-shape member. The plant is placed in a plate. Accordingly, the above problems are not solved because the root of the plant still grows down toward the bottom of the water level at the bottom of the pot, and the accumulated water at the bottom of the pot can easily damage the root. Further, air circulation is still poor.

Accordingly, there is a need for an improved pot to solve the above problems. The present invention provides a solution to solve the above and other related problems.

Document FR-A-2 310 695 describes a pot apparatus having a plate and a tray; the plate and the tray having a side wall and a bottom wall, respectively. There is a distance between the side wall of the plate and the up-edge of the side wall of the tray. The tray is filled with water. A leg is build into the bottom wall of the plate and provides a fluid communication between the plate and the tray. No air vents are disposed on the bottom wall of the plate so that there is no air flow in an out of the plate bottom to the soil. Further, there is no stable support of the plate under all circumstances as the leg has no bottom wall with a hole.

### Summary of the Invention

The present invention relates to a pot with a leg, more particularly to a pot with at least one leg, according to claim 1 and furthermore particularly to a pot with one or two legs and to a multiple cell tray according to claim 6. The present invention can be used in a variety of pots, including hanging baskets, window boxes, etc.

As a pot apparatus may need a connection, at least one connection may be disposed on the tray to connect the plate. The same number of connection receivers may be disposed on the plate. The shape of the connection may vary.

In the present invention, a pot apparatus includes a plate and at least one leg connecting to the plate at a first end of the leg. The leg includes a fluid conduit between the first end and a second end of the leg.

Further, the pot apparatus includes a tray. The tray can be detachably connected to the second end of the leg.

The leg may have an extension section at the first end extending into a bottom surface of the plate.

In one embodiment, the pot apparatus has means for connecting the second end of the leg to the tray.

Further, the plate has plurality of air vents on the bottom surface of the plate.

Still in one embodiment, the plate has a fluid intake mouth which receives fluid.

Yet in one embodiment, the pot apparatus has at least one support being disposed on the tray to support the plate. In an alternative embodiment, at least one support can be disposed on the plate to stand on the tray.

One advantage of the above invention is that the root of the plant placed in the plate is prevented from extending to a fluid holding area through the leg.
Accordingly, the root of the plant is not easily damaged by excessive fluid. Further advantage is that the tray has a much larger fluid holding area for the plant to take the fluid from the fluid holding area if needed so that it is not necessary to nurse the plant very frequently, and air circulation for the plant is much improved. Furthermore, the present invention allows to reduce soil use and/or fertilizer losses and any environmental concerns.

According to the present invention, a multiple-pot apparatus includes a plurality of plates which can be placed in a cell tray which holds the plurality of plates. A leg with an extension is in fluid communication with the corresponding plate and the corresponding cell. Accordingly, the present invention is also very useful and cost effective for irrigation systems used in greenhouses or nursery fields, and at any other commercial or residential places.

In another embodiment of the present invention, a pot apparatus is placed on a board member floatable on fluid. The second end of the leg penetrates into the board member and projects into the fluid. The leg is in fluid communication between the fluid underneath the board member and the plate of the pot. In a further embodiment of the present invention, a cell plate includes a plurality of plates, each of which has a corresponding leg. The legs penetrate into a board member floatable on fluid. The legs are in fluid communication between the fluid underneath the board member and the cell plate. Accordingly, the present invention also provides a possibility that plants can be grown on a fluid surface, such as water, lake, or river, etc. Further in one embodiment, the leg has an extension extending into the bottom surface of the plate.

In the present invention, a pot apparatus includes a tray and at least one leg which is extendable into a plate at a first end of the leg and connectable to the tray at a second end of the leg. The leg has a fluid conduit between the first and second ends of the leg, and the fluid conduit of the leg is in fluid communication with the tray. Further, the fluid conduit of the leg is in fluid communication with the plate. The leg may have an extension which is inserted into a bottom surface of the plate. In one embodiment, an extension of the leg can be inserted into a traditional plate, and the leg is supported by a tray. In another embodiment, a frame which is used to support the plate can be placed in the tray, and the leg is inserted into the frame at the second end of the leg. Accordingly, the present invention can be simply applied to many traditional pot apparatuses with a plate and/or a tray to improve air circulation and to prevent damages to the root.

These and various other advantages and features of novelty which characterize the invention are pointed out with particularity in the claims annexed hereto and forming a part hereof. However, for a better understanding of the invention, its advantages and objects obtained by its use, reference should be made to the drawings which form a further part hereof, and to the accompanying descriptive matter, in which there is illustrated and described a preferred embodiment of the invention.

### Brief Description of the Drawings

A better understanding of the construction and operational characteristics of a preferred embodiment(s) can be realized from a reading of the following detailed description, especially in light of the accompanying drawings in which like reference numerals in the several views generally refer to corresponding parts.
Figure 1 is a perspective view of a traditional pot apparatus.
Figure 2 is a perspective view of a legged pot in accordance with the present invention.

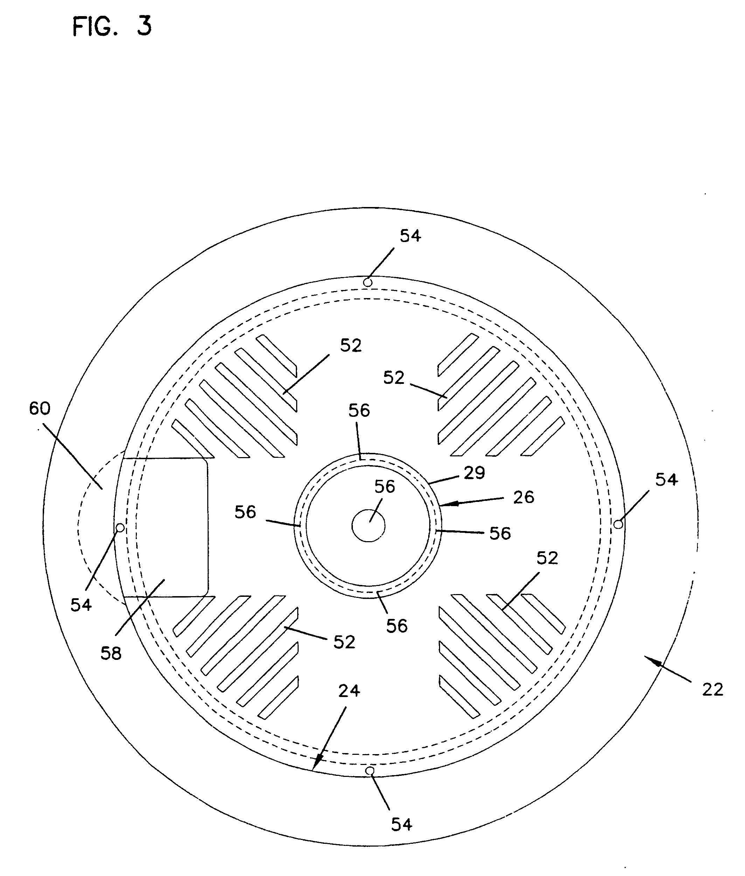

Figure 3 is a top view of a legged pot in accordance with the present invention.
Figure 4 is an exploded side view of a legged pot in accordance with the present invention.
Figure 5 is an exploded front view of a legged pot in accordance with the present invention.
Figures 6A,6B,6C,6D are perspective views of different embodiments of connecting means between a leg and a tray or between a plate and a tray in accordance with the present invention.
Figure 7A is a top view of a legged pot in accordance with the present invention.
Figure 7B is an enlarged perspective view of a support on a tray of Figure 7A.
Figure 8 is a side view a legged pot in accordance with the present invention.
Figure 9A is a perspective view of a cell tray in accordance with the present invention.
Figure 9B is an enlarged perspective view of one of the cells of the cell tray of Figure 9A.
Figure 10A is a perspective view of a cell plate placed over a floatable board member in accordance with the present invention.
Figure 10B is an enlarged, perspective view of one of the cells of the cell plate of Figure 10A.
Figures 11A, 11B are perspective views of two different embodiments of a pot apparatus with a leg separated from a support in accordance with the present invention.
Figures 12A, 12B are perspective views of another two different embodiments of a pot apparatus with a leg being a part of a support in accordance with the present invention.
Figure 13 is a perspective view of a pot apparatus with legs filled with wick where the leg is a part of a support in accordance with the present invention.
Figure 14 is a perspective view of another embodiment of a pot apparatus with a leg being a part of a support in accordance with the present invention.
Figure 15A is a perspective view of a tray of a pot apparatus with a leg integral with the tray and filled with soil in accordance with the present invention.
Figure 15B is a perspective view of a tray of a pot apparatus with a leg integral with the tray and filled with wick in accordance with the present invention.
Figure 16A is a front view of a tray in accordance with the present invention.
Figure 16B is a top view of a tray in accordance with the present invention.
Figure 16C is an enlarged perspective view of a support on the tray of Figures 16A and 16B.
Figure 16D is an enlarged perspective view of a leg insertable into a plate (not shown) at one end and supported by the tray at the other end in accordance with the present invention.

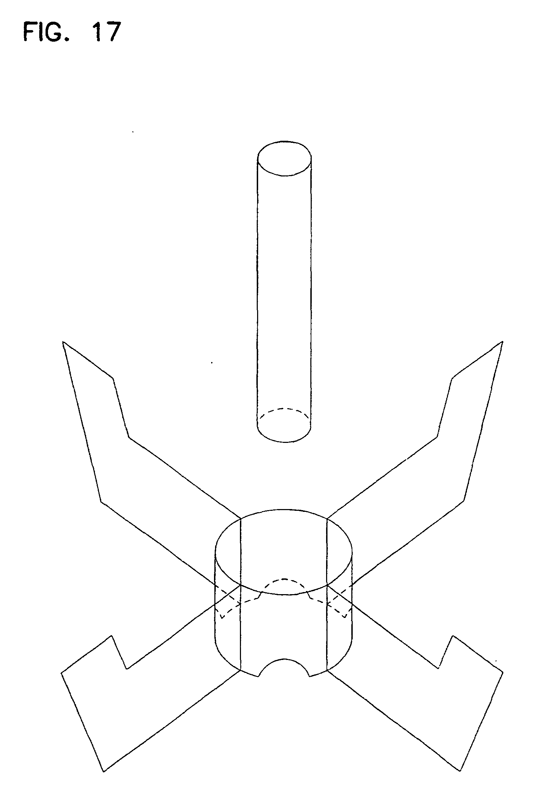

Figure 17 is an exploded perspective view of another embodiment having a frame and a leg used in a pot apparatus in accordance with the present invention.
Figure 18 is a perspective view of a pot apparatus used in a window box in accordance with the present invention.
Figure 19 is a perspective view of an improved pot apparatus over the traditional pot apparatus of Figure 1 using the principles of the present invention.

### Detailed Description of the Preferred Embodiment

The present invention relates to a pot with a leg, more particularly to a pot with at least one leg, and furthermore particularly to a pot with one or two legs.

In the following description of the exemplary embodiment, reference is made to the accompanying drawings which form a part hereof, and in which is shown by way of illustration the specific embodiment in which the invention may be practiced. It is to be understood that other embodiments may be utilized as structural changes may be made without departing from the scope of the present invention.

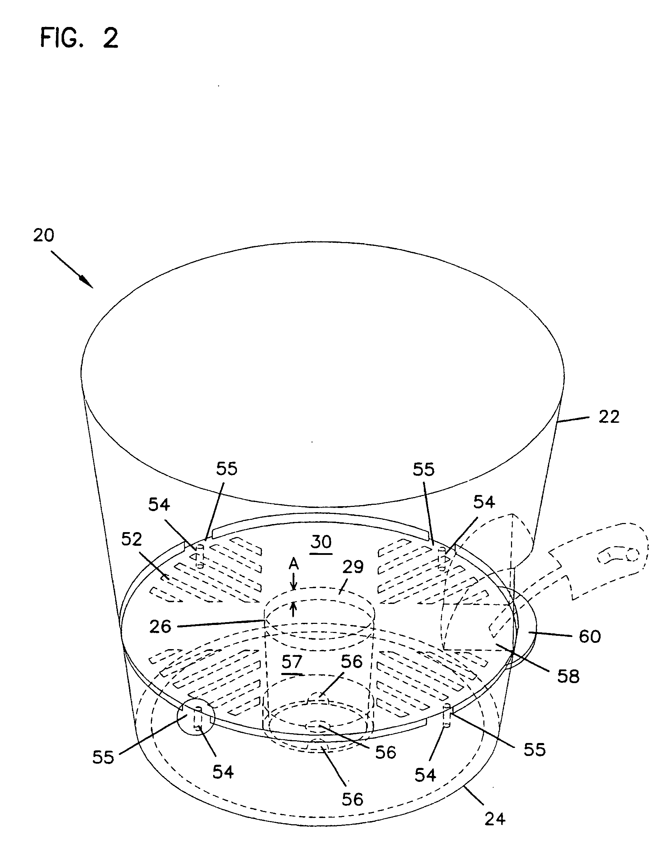

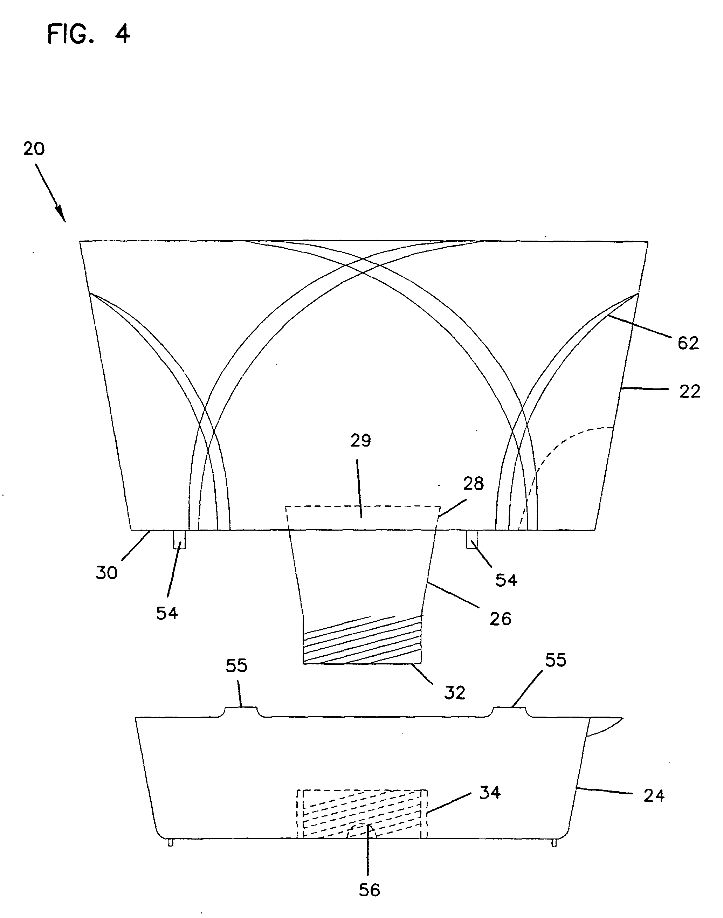

Referring now to Figure 2, there is, generally illustrated by reference numeral 20, a pot in accordance with the principles of the present invention. The pot 20 has a plate 22, a tray 24, and a leg 26. The leg 26 is disposed between the plate 22 and the tray 24. The interconnection between the leg 26 and the plate 22 and the interconnection between the leg 26 and the tray 24 are shown in Figure 4. A first end 28 of the leg 26 has an extended section 29 (labeled as "A" in Figure 2) which projects into a bottom surface 30 of the plate 22 so that the roots of the plant in the plate (not shown) can be stopped from extending down the leg 26 toward the tray 24. The first end 28 of the leg 26 can be integral with the plate 22. It is appreciated that other type of detachable connections, such as screw-on or plug-in type of connections, can be used within the principles of the invention.

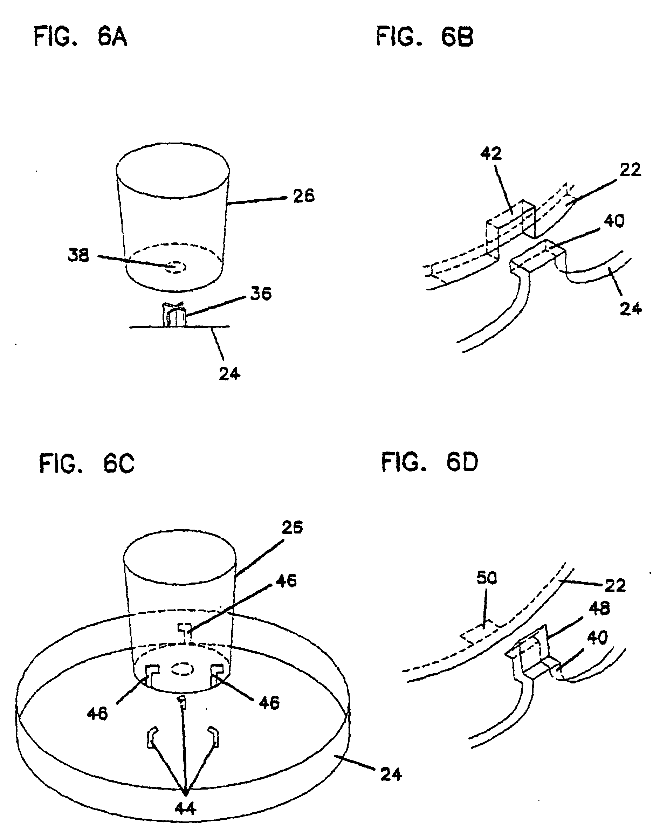

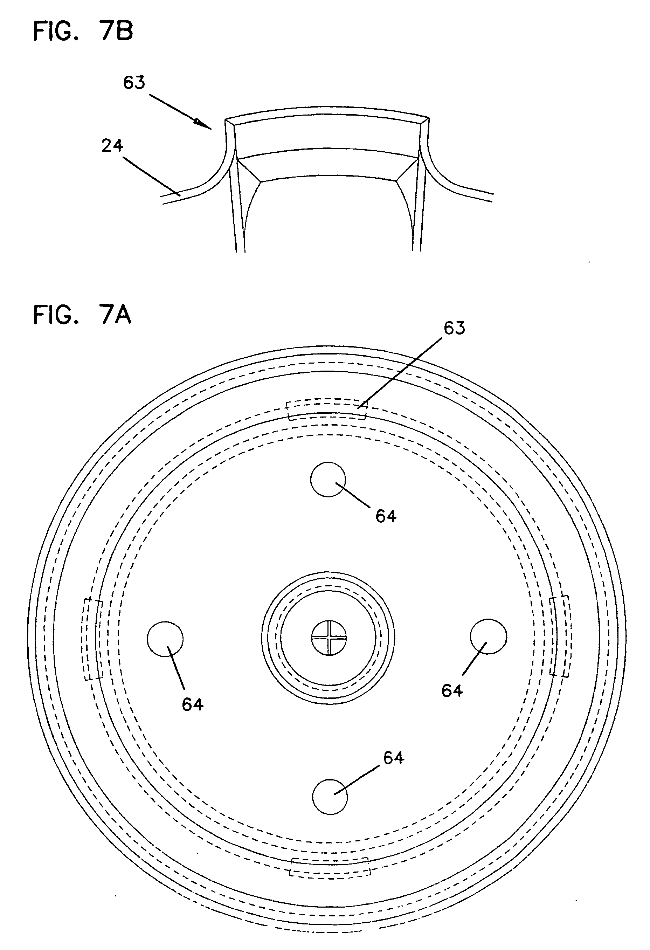

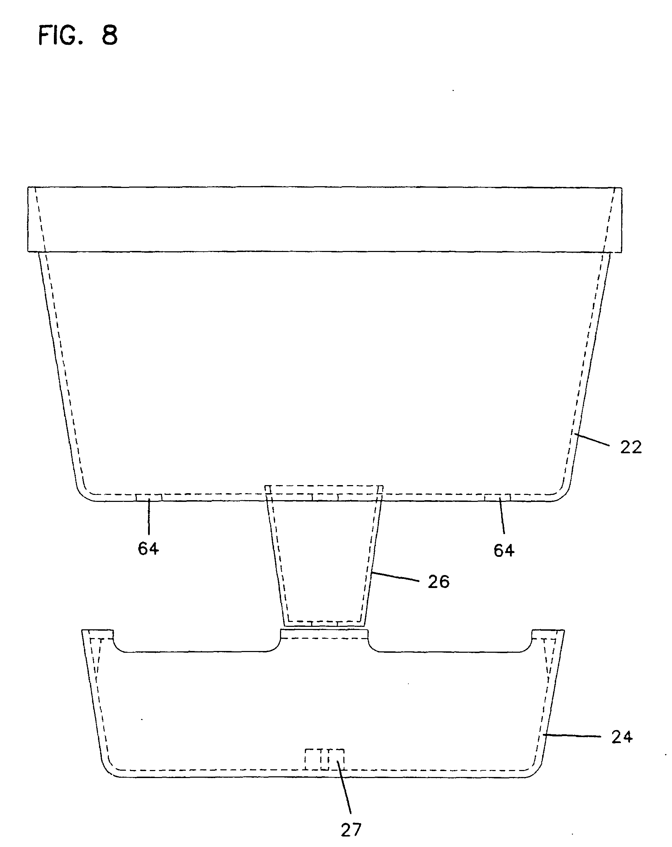

A second end 32 of the leg 26 is screwed onto a receiving member 34 of the tray 24. It is appreciated that other means of connection can be used to connect the leg 26 and the tray 24. For example, the inner screw part can be disposed on the leg, and the outer screw part can be disposed on the receiving member 34. Also, other types of connections, such as plug-in types of connections, can be used within the scope of the present invention. Figures 6A-6D show four exemplary embodiments for connecting the leg 26 and the tray 24 (Figures 6A,6C) or the plate 22 and the tray 24 (Figures 6B,6D). In Figure 6A, the receiving member is in a cross web 36 which is secured in a bore 38 of the leg 26. In Figure 6B, the receiving member is a projection 40 which is disposed on a peripheral edge of the tray 24. The projection 40 is detachably locked into a notch 42 of the plate 22. The notch 42 is disposed on a peripheral edge of the plate 22. In Figure 6C, the receiving member is arranged to be a plurality of hooks 44 which are extended proximate the center of the tray 24. The leg 26 has a plurality of receiving notches 46 for retaining the hooks 44 in a locking position. In Figure 6D, the connection means is arranged similar to the one shown in Figure 6B except that the projection 40 has an extended hook 48 to be received in a bore 50 of the plate 22 at the peripheral thereof. It is appreciated that the location of the connection means can be varied without departure from the principles of the invention. It is also appreciated that other alternative embodiments of the connection means can be used within the scope of the present invention. It is further appreciated that in some embodiments, connection means may not be necessary. For example, for clay and/or china pots, it may not be necessary to use screw-on or plug-in types of connection means for connecting the leg to the tray due to the heavy weight. Figures 7A,7B show a legged pot having a plate support section 63 on the tray 24. In Figure 8, the leg 26 is placed directly on the tray 24 and is in fluid communication with the tray 24 via a conduit 27 extending to the bottom of the tray 24. Air vents shown in Figures 7A, 7B, and 8 are in a form of holes 64.

Further in Figure 2, air vents 52 are disposed on the bottom surface 30 of the plate 22. It is appreciated that different arrangements and shapes of the air vents, such as round shape or oval shape, etc., can be used suitable for different applications. In addition, three or more supports 55 (the raised sections) or supports 54 (the rods) may be used to provide additional stability between the plate 22 and the tray 24.

Also in Figure 2, the leg 26 has a hollow conduit 57 in fluid communication between the plate 22 and the tray 24. For example, water or other types of fluid can be drained from the plate 22 (or sometimes air vents 52) to the tray 24 when there is an overflow in the plate 22, or can be absorbed or sucked by soil or wick, etc., from the tray 24 into the plate 22 when the plate is dry enough to require irrigation. In one embodiment, the leg 26 may have a plurality of side and/or bottom openings 56 at the second end 32. It is appreciated that other embodiments can be used to achieve the same function of fluid communication. For example, a membrane or other types of filtration members may be used to replace the through openings 56 at the second end 32. Accordingly, the pot of the present invention can hold much more fluid in the tray than a traditional pot, and air circulation between the plate 22 and the tray 24 is also much more improved.

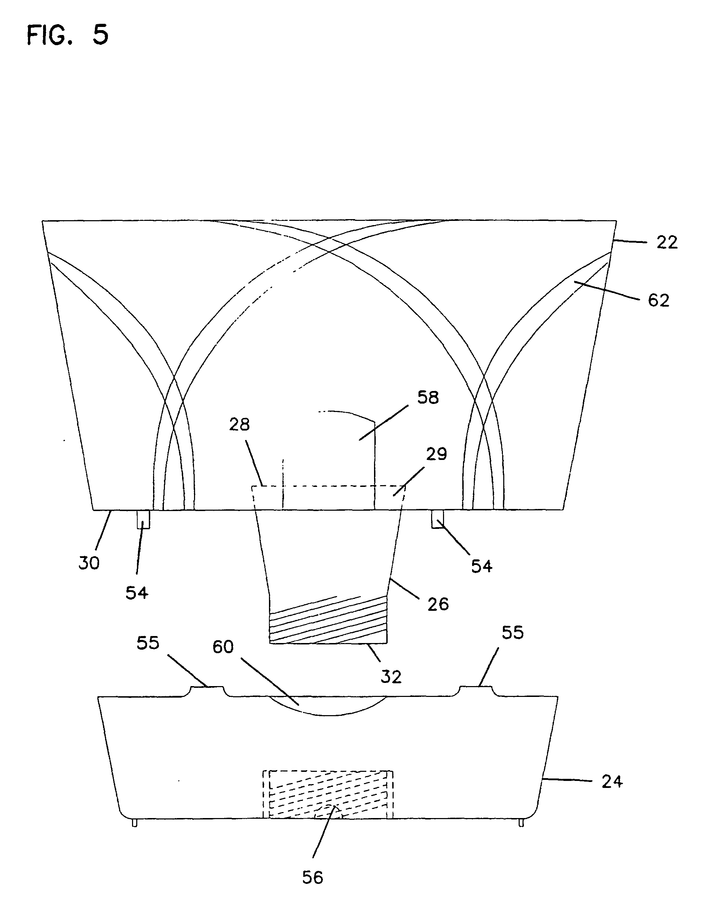

Further in Figure 2, a fluid intake mouth 58 may be disposed on the side of the pot 20 to allow easy manual irrigation of the plants (not shown). A raised section 60 may be added to hold the fluid in the pot 20 to avoid spilling the fluid out of the pot. In Figures 4 and 5, decorations 62 may be added on the exterior of the plate and/or the tray for aesthetic purposes.

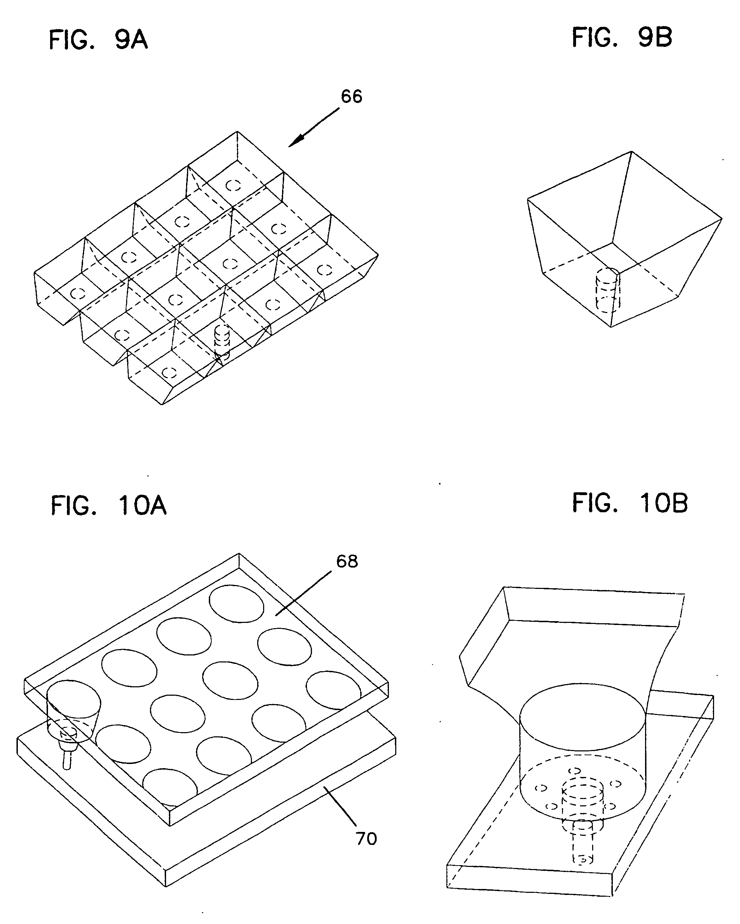

In the above embodiments, the pot 20 has one leg. It is appreciated that multiple legs can be used for one pot within the principles of the present invention. It is also appreciated that the legs can be integrally mounted to either or both of the tray 24 and the plate 22. In a further embodiment, the leg can be detachably screwed onto or plugged into the bottom of the plate in a similar manner. Further, it is appreciated that multiple one-leg pots can be placed in one cell tray 66 as shown in Figure 9A. Each cell may have a suitable connection means for connecting the leg to the plate and the cell tray. Figure 9B shows an individual cell with a receiving member to be connected to a corresponding leg.

Figure 10A illustrates a plate cell 68 having a plurality of individual plates as shown in Figure 10B. The legs which are attached to the bottom of the plate cell 68 are inserted into a board member 70 floatable on fluid. The legs penetrate through the board member 70 into the fluid. The fluid can be absorbed or sucked to the cell(s) of the cell plate if needed such that it is not necessary to use a tray for holding extra fluid for irrigation purposes. Further, the fluid can be absorbed into each individual plate depending on its own need for the fluid. The board member 70 can be made from suitable materials, such as polystyrene plastic, e.g. Styrofoam™, etc. Accordingly, the plants can be grown on a fluid surface, such as water, lake, or river, etc.

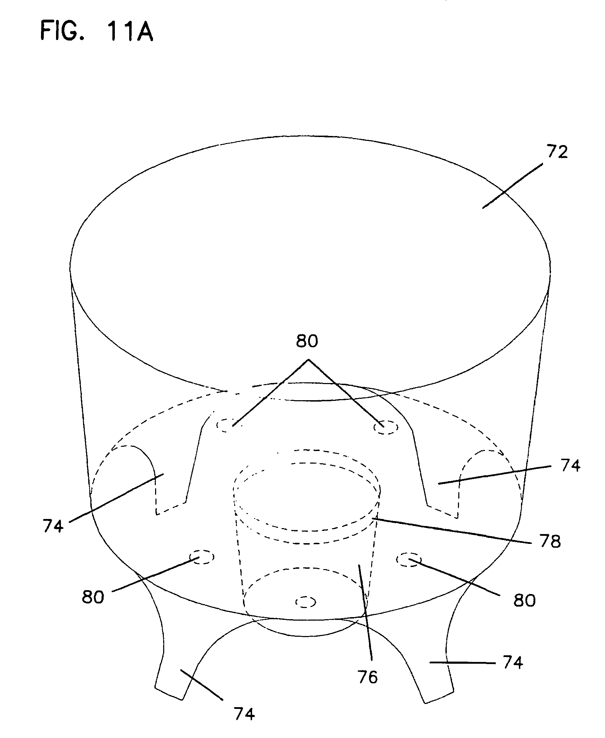

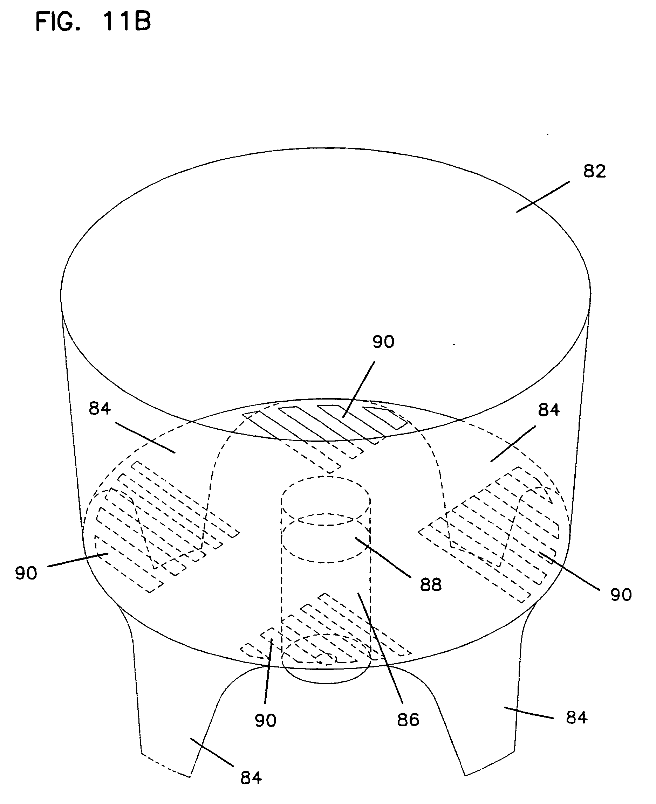

As mentioned before, a plate can be supported by a plurality of supports. Figure 11A illustrates a plate 72 which is supported by four supports 74 with a leg 76 separated from the supports. The leg 76 has an extension 78, and air vents 80 which are in a round shape are disposed on the bottom surface of the plate 72. Figure 11B illustrates a plate 82 which is supported by four supports 84 with a leg 86 also separated from the supports. The leg 86 has an extension 88, and air vents 90 which are in a sink shape are disposed on the bottom surface of the plate 82. The supports 74 and 84 may be integrally connected to the bottom surface of the plate 72, 82.

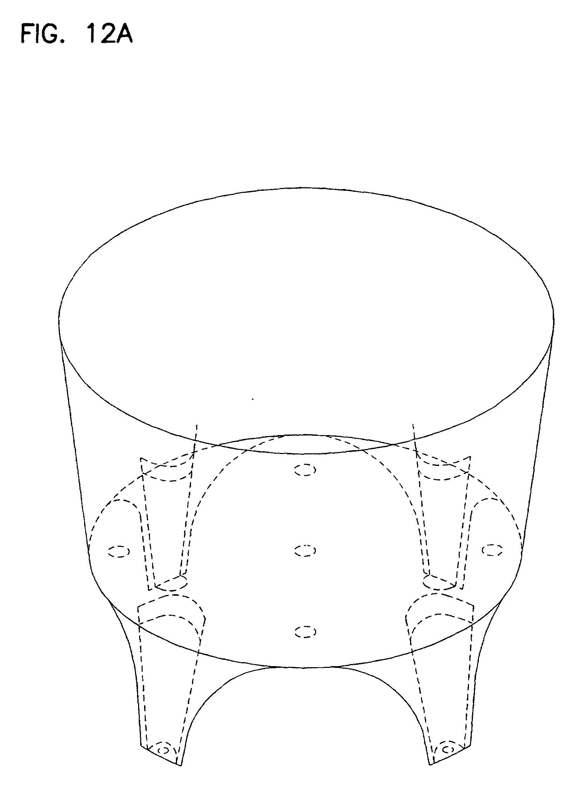

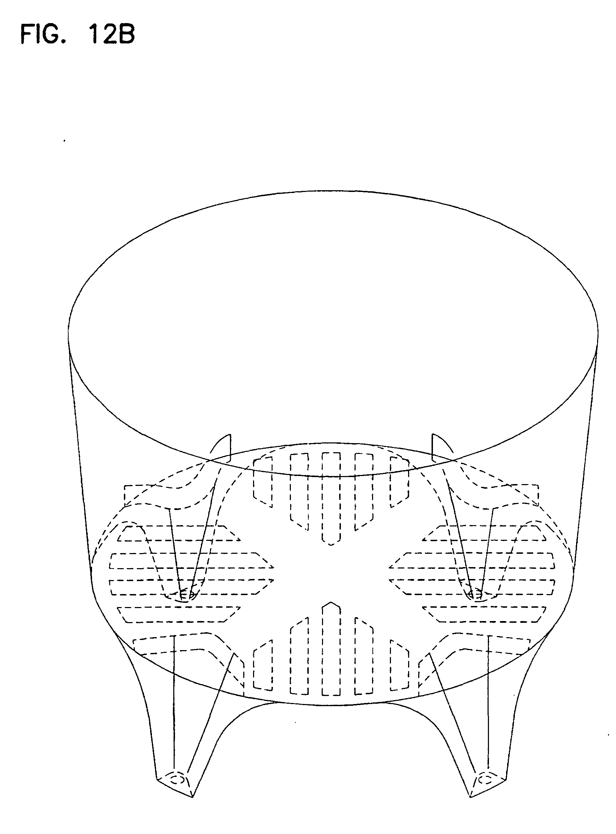

It is appreciated that a plate may include a leg to be a part of a support, i.e. the support has a fluid conduit. Figures 12A, 12B illustrate a plate having a plurality of legs each of which is a part of a support.

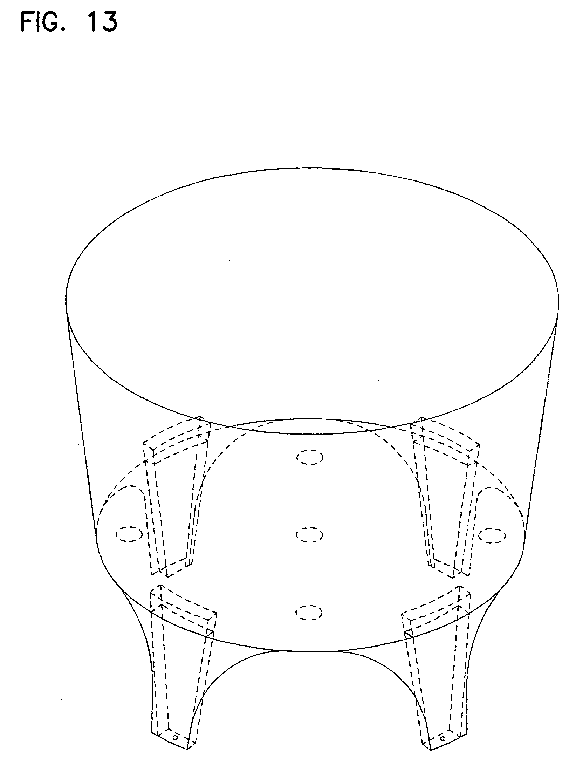

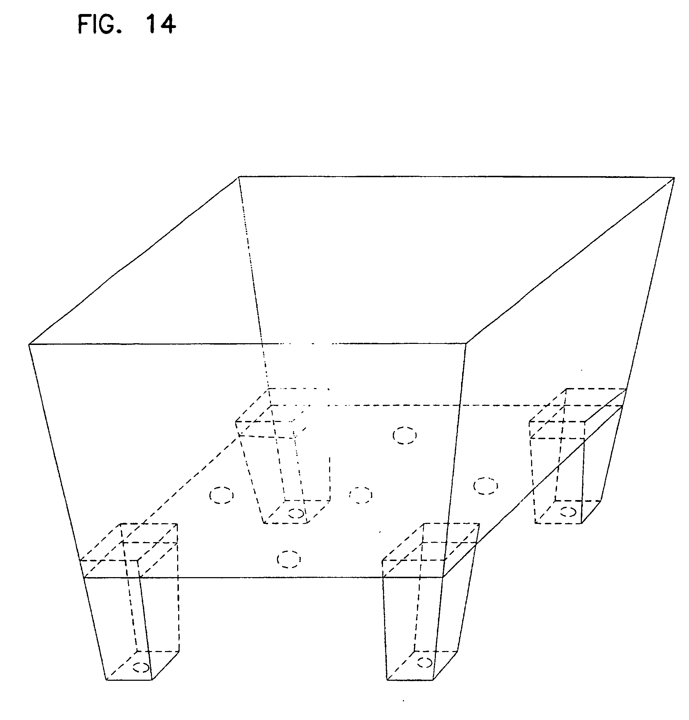

Figure 13 shows a plate with legs filled with wick where each of the legs is a part of a support. Figure 14 shows a square pot having a plate with a plurality of legs each of which is a part of a support.

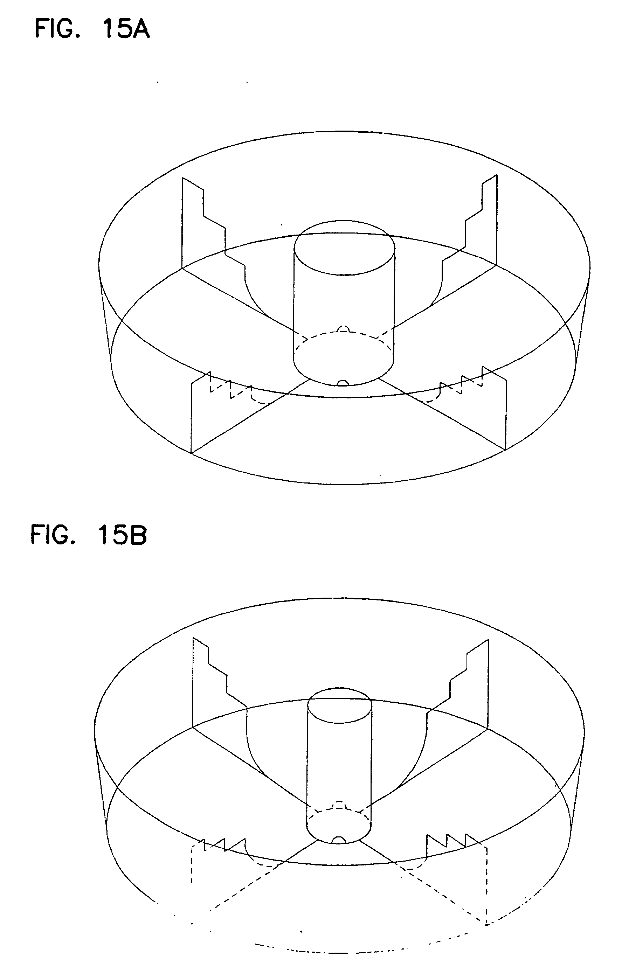

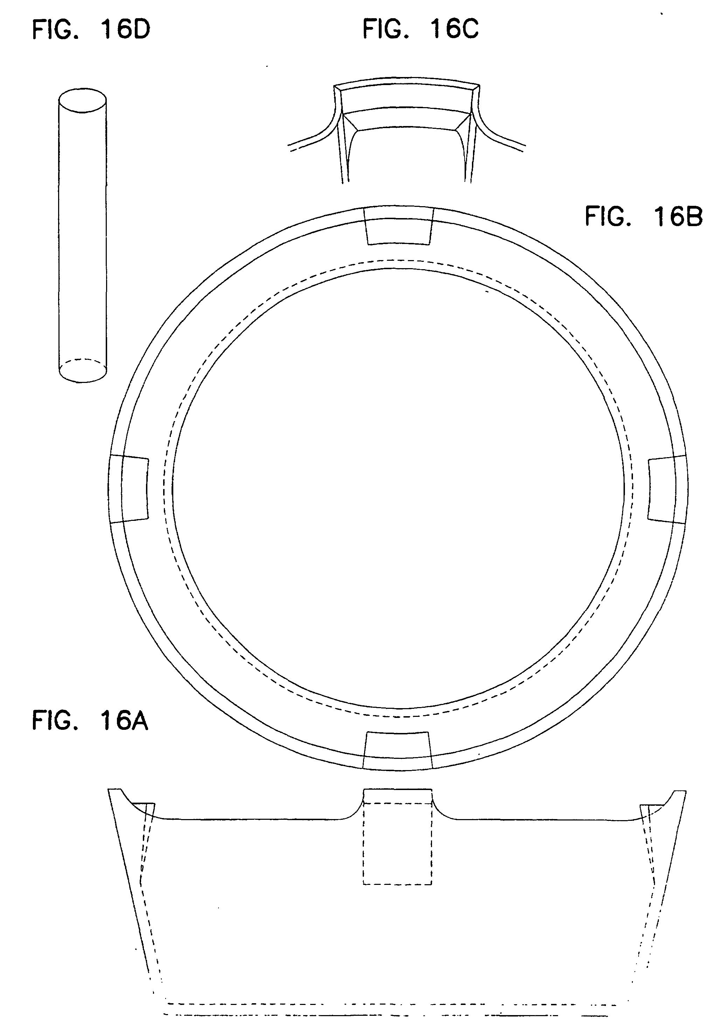

As also mentioned above, a leg can be placed in a tray, either mounted in a tray as shown in Figures 15A, 15B or detachably placed in a tray as shown in Figures 16A,B,C,D. Also, it is appreciated that different shapes of the leg can be used for different purposes. Figure 15A shows a leg filled with soil, whereas Figure 15B shows a leg filled with wick.

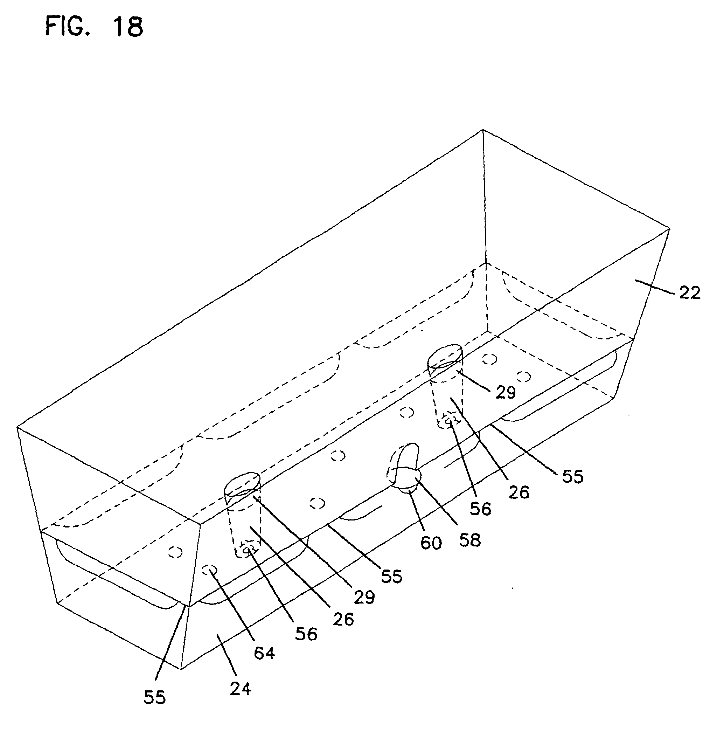

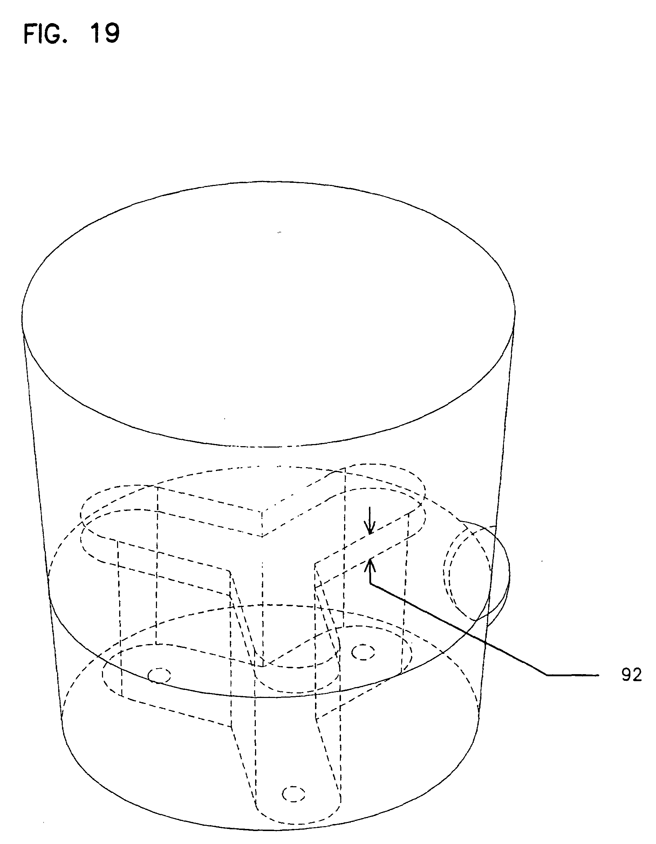

The present invention can also be applied to improve many traditional pots. For example, a leg shown in Figure 16D or more than one legs can be inserted into the bottom of a plate of a traditional pot apparatus. In addition, a frame and a rod can be placed underneath the plate of a traditional pot apparatus. The frame may be designed and arranged to support the plate and to hold the leg. The leg with an extension is in fluid communication with the plate as described above. Further, the present invention can be used to improve many pot related applications, such as window boxes as shown in Figure 18 and hanging baskets (not shown). For illustration and comparison purposes, similar references numerals are used in Figure 18. Furthermore, in case of the traditional pot apparatus as shown in Figure 1, Figure 19 shows an improved pot apparatus design using the principles of the present invention by adding an extension section 92 over the Y-shaped section to at least prevent the root of the plant from extending toward the lower section of the pot.

The foregoing description of the exemplary embodiment of the invention has been presented for the purposes of illustration and description. It is not intended to be exhaustive or to limit the invention to the precise form disclosed. Many modifications and variations are possible in light of the above teaching. It is intended that the scope of the invention be limited not with this detailed description, but rather by the claims appended hereto.

## Claims

1. A pot apparatus (20), comprising:
a plate (22), the plate having a bottom wall and a side wall; and
a tray (24), the tray having a bottom wall and a side wall, between the side wall of the plate body and the up edge of the side wall of the tray having a clearance / distance to allow air flow in and out of the tray and ventilate under the plate body thoroughly, and may adding fluid to the tray through the opening; and
at least one leg (26) build into the plate bottom for supporting the plate and providing a fluid communication between the plate and the tray;
**characterized in that**
the plate (22) has a plurality of air vents (52, 64, 80, 90) disposed on the bottom wall of the plate; and
the leg has a side wall and a bottom wall and at least one hole (56, 38) disposed on the bottom wall.

2. The pot apparatus of claim 1, further comprising at least one support (54, 55) disposed on the tray to support the plate.

3. The pot apparatus of claim 1 or 2, further comprising an extension section (29) extending upward from the leg of the bottom surface of the plate.

4. A pot apparatus according to any of claims 1 to 3, comprising:
three or more legs extending upward from the bottom wall of the tray, the legs having a side wall and a top wall.

5. A pot apparatus according to any of claims 1 to 4, comprising:
a frame disposed on the bottom surface of the tray, a leg companied with the tray, the leg filled with wicking materials

6. A multiple cell tray, comprising:
a cell tray (66), the cell tray including a plurality of cells, each cell having a bottom wall and side walls; and
at least one leg extending downward from the bottom wall of each of the cells, the leg having a side wall and a bottom wall, and a hole disposed on the bottom wall.

## Patentansprüche

1. Topfvorrichtung (20), aufweisend:
einen Teller (22), wobei der Teller eine Bodenwand und eine Seitenwand aufweist; und
eine Schale (24), wobei die Schale eine Bodenwand und eine Seitenwand aufweist, wobei zwischen der Seitenwand des Tellerkörpers und der Oberkante der Seitenwand der Schale ein Freiraum/Abstand besteht, um einen Luftstrom in und aus der Schale zu ermöglichen und unter dem Tellerkörper gründlich zu belüften, und wobei man Flüssigkeit zu der Schale durch die Öffnung zuführen kann; und
zumindest ein Bein (26), ausgebildet in dem Boden des Tellers, zum Tragen des Tellers und Vorsehen einer Fluidverbindung zwischen dem Teller und der Schale;
**dadurch gekennzeichnet, dass**
der Teller (22) eine Mehrzahl von Entlüftungen (52, 64, 80, 90) aufweist, angeordnet an der Bodenwand des Tellers; und
das Bein eine Seitenwand und eine Bodenwand und zumindest ein Loch (56, 38) aufweist, angeordnet an der Bodenwand.

2. Topfvorrichtung des Anspruchs 1, weiter aufweisend zumindest eine Stütze (54, 55), angeordnet an der Schale, um den Teller zu stützen.

3. Topfvorrichtung des Anspruchs 1 oder 2, weiter aufweisend einen Ausdehnungsabschnitt (29), welcher sich nach oben von dem Bein von der Bodenoberfläche des Tellers erstreckt.

4. Topfvorrichtung gemäß irgendeinem der Ansprüche 1 bis 3, aufweisend:
drei oder mehr Beine, welche sich nach oben von der Bodenwand der Schale erstrecken, wobei die Beine eine Seitenwand und eine obere Wand aufweisen.

5. Topfvorrichtung gemäß irgendeinem der Ansprüche 1 bis 4, aufweisend:
einen Rahmen, angeordnet an der Bodenoberfläche der Schale, ein Bein, zusammengehörend mit der Schale, wobei das Bein mit Materialien mit Docht-Effekt gefüllt ist.

6. Mehrzellenschale, aufweisend:
eine Zellenschale (66), wobei die Zellenschale eine Mehrzahl von Zellen einschließt, wobei jede Zelle eine Bodenwand und Seitenwände aufweist; und
zumindest ein Bein, welches sich nach unten von der Bodenwand einer jeder der Zellen erstreckt, wobei das Bein eine Seitenwand und eine Bodenwand aufweist, und ein Loch, welches an der Bodenwand angeordnet ist.

## Revendications

1. Appareil formant pot (20) comprenant :
une plaque (22), la plaque étant dotée d'une paroi inférieure et d'une paroi latérale ; et
un plateau (24), le plateau étant doté d'une paroi inférieure et d'une paroi latérale, entre la paroi latérale du corps de plaque et le bord supérieur de la paroi latérale du plateau ayant un jeu/distance pour permettre l'écoulement de l'air dans et à l'extérieur du plateau et permettre d'aérer complètement sous le corps de plaque, et de pouvoir ajouter du fluide au plateau par l'ouverture ; et
au moins un pied (26) construit dans le fond de la plaque pour supporter la plaque et proposer une communication de fluide entre la plaque et le plateau ;
**caractérisé en ce que**
la plaque (22) possède une pluralité d'aérations d'air (52, 64, 80, 90) disposées sur la paroi inférieure de la plaque ; et
le pied possède une paroi latérale et une paroi inférieure et au moins un trou (56, 38) disposé sur la paroi inférieure.

2. Appareil formant pot selon la revendication 1, comprenant en outre au moins un support (54, 55) disposé sur le plateau pour supporter la plaque.

3. Appareil formant pot selon la revendication 1 ou 2, comprenant en outre une section d'extension (29) s'étendant vers le haut à partir du pied de la surface inférieure de la plaque.

4. Appareil formant pot selon l'une quelconque des revendications 1 à 3, comprenant :
trois pieds ou plus s'étendant vers le haut à partir de la paroi inférieure du plateau, les pieds ayant une paroi latérale et une paroi supérieure.

5. Appareil selon l'une quelconque des revendications 1 à 4, comprenant :
un châssis disposé sur la surface inférieure du plateau, un pied accompagné avec le plateau, le pied étant rempli avec des matériaux à effet de mèche.

6. Plateau multicellulaire comprenant :
un plateau cellulaire (66), le plateau cellulaire comprenant une pluralité de cellules, chaque cellule étant dotée d'une paroi inférieure et de parois latérales ; et
au moins un pied s'étendant vers le bas à partir de la paroi inférieure de chacune des cellules, le pied étant doté d'une paroi latérale et d'une paroi inférieure, et d'un trou disposé sur la paroi inférieure.
